# EUROPEAN PATENT SPECIFICATION

(11) **EP 2 569 847 B1**
(45) Date of publication and mention of the grant of the patent: **11.09.2024**
(21) Application number: 11738275.4
(22) Date of filing: 13.05.2011
(51) Int. Cl.: H02J 9/06, H02J 3/38

(54) **UNINTERRUPTIBLE POWER SUPPLY SYSTEMS AND METHODS USING ISOLATED INTERFACE FOR VARIABLY AVAILABLE POWER SOURCE**
UNTERBRECHUNGSFREIE STROMVERSORGUNGSSYSTEME UND VERFAHREN MIT EINER ISOLIERTEN SCHNITTSTELLE FÜR VARIABEL VERFÜGBARE STROMQUELLE
SYSTÈMES ET PROCÉDÉS D'ALIMENTATION ÉLECTRIQUE SANS COUPURE UTILISANT UNE INTERFACE ISOLÉE POUR UNE SOURCE D'ÉNERGIE À DISPONIBILITÉ VARIABLE

(30) Priority: 13.05.2010 US 779522
(43) Date of publication of application: 20.03.2013
(73) Proprietor: Eaton Intelligent Power Limited, Dublin 4 (IE)
(72) Inventor: NAVARRO, George, A., Raleigh, North Carolina 27615 (US); JOHNSON, Robert, W., Jr., Raleigh, North Carolina 27615 (US); ANDERSON, Jason, S., Raleigh, North Carolina 27616 (US)
(74) Representative: Novagraaf Group
(86) International application number: PCT/IB2011/001028
(87) International publication number: WO 2011/141811

(56) References cited:
- EP-A2- 1 710 890
- EP-A2- 1 841 051
- JP-A- 2000 201 440
- US-A- 6 134 124
- US-A1- 2004 240 244
- US-A1- 2007 210 652
- US-A1- 2007 273 210
- US-A1- 2008 129 120
- US-A1- 2008 278 003
- US-A1- 2009 230 772
- US-B1- 6 304 006
- US-B2- 7 411 308

## Description

### BACKGROUND OF THE INVENTIVE SUBJECT MATTER

The inventive subject matter relates to power supply systems and methods and, more particularly, to uninterruptible power supply (UPS) systems and methods.

Data centers, industrial facilities, medical facilities and the like often have AC power distribution systems that are protected by UPS systems. UPS systems may be used in such applications to provide backup power to maintain operation in event of failure of the primary utility supply. UPS systems commonly have an "on-line" configuration including a rectifier and inverter coupled by a DC link that is also coupled to an auxiliary source, such as a battery, flywheel converter or other energy storage device. In some UPS applications, a renewable source, such as a photovoltaic source, may be coupled to the DC link of an on-line UPS to provide supplemental power, as described, for example, in U.S. Patent No. 7,411,308 to Parmley and an article entitled "Photovoltaic UPS" by Jayasimha et al., IEEE TENCON 2003 Conference on Convergent Technologies for Asia-Pacific Region, vol. 4, pp. 1419-1423 (2003). ). Further, attention is drawn to US 6 134 124 A, which relates to an electronic interface that couples a combination of generation and storage devices with a power grid and/or a load. The interface comprises a DC bus; a DC storage device coupled to the DC bus; a first DC-to-AC inverter having a DC port operatively coupled to the DC bus, and an AC port; a second DC-to-AC inverter having a DC port operatively coupled to the DC bus, and an AC port; a switch for electrically coupling the AC port of the second DC-to-AC inverter to a first generator or an AC storage device; a first rectifier for coupling an AC output of the first generator to the DC bus; and a second rectifier for coupling an AC output of the AC storage device to the DC bus. Document EP 1 710 890 A2 is another example of prior art document.

### SUMMARY OF THE INVENTIVE SUBJECT MATTER

In accordance with the present invention, a UPS system and a method as set forth in claims 1 and 5 are provided. Further embodiments are inter alia disclosed in the dependent claims. Embodiments of the inventive subject matter provide uninterruptible power supply (UPS) systems. Such systems inter alia include an AC input configured to be coupled to an AC power source, an AC output configured to be coupled to a load a first power conversion circuit including a first converter circuit coupled to the AC input, a second converter circuit coupled to the AC output and a first DC bus coupling the first converter circuit to the second converter circuit. The system further includes a second power conversion circuit having a third converter circuit having an output coupled to the AC output, a fourth converter circuit coupled and a second DC bus coupling the third converter circuit to the fourth converter circuit, the second DC bus being configured to receive power from a photovoltaic power source. The system further has a control circuit operatively associated with the first and second power conversion modules and configured to cooperatively control the first to third converter circuits to concurrently transfer power to the load from the AC power source via the first and second converter circuits and from the photovoltaic power source via the third converter circuit. The first DC bus may be coupled to an auxiliary power source, while the second DC bus is connected to the photovoltaic power source , such that the first DC bus and the second DC bus are not connected in common to the auxiliary power source. In this manner, the photovoltaic power source may be relatively isolated from the first DC bus .

In some embodiments, the first power conversion module may be configured to provide a rectifier coupled to the AC input and an inverter coupled to the AC output. The second power conversion module may be configured to provide an inverter as the third power conversion module coupled to the AC output with the DC bus of the second power conversion module coupled to the photovoltaic power source.

In some embodiments, the fourth converter unit is inactive. Each of the power conversion modules may include a DC bus interface unit, and the DC bus interface unit of the second power conversion module may be configured to couple the DC bus to the photovoltaic power source. In further embodiments, the fourth converter unit may have an input coupled to the photovoltaic power source and the DC bus of the second power conversion module may be additionally coupled to an auxiliary power source, such as a battery.

Additional embodiments of the inventive subject matter provide methods including populating a UPS system with a plurality of power conversion modules as claimed.

### BRIEF DESCRIPTION OF THE DRAWINGS

FIG. 1 is a schematic diagram illustrating a UPS system useful for understanding the inventive subject matter, but not covered by the claims.
FIGs. 2 and 3 are schematic diagram illustrating operations of the UPS system of FIG. 1.
FIG. 4 is a schematic diagram illustrating a modular UPS system according to some embodiments of the inventive subject matter.
FIG. 5 is a schematic diagram illustrating configurations of various power conversion modules for a modular UPS system according to some embodiments of the inventive subject matter.
FIG. 6 is a schematic diagram illustrating a modular UPS system according to further embodiments of the inventive subject matter.

### DETAILED DESCRIPTION OF EXEMPLARY EMBODIMENTS

Specific exemplary embodiments of the inventive subject matter now will be described with reference to the accompanying drawings. This inventive subject matter may, however, be embodied in many different forms and should not be construed as limited to the embodiments set forth herein; rather, these embodiments are provided so that this disclosure will be thorough and complete, and will fully convey the scope of the inventive subject matter as defined by the appended claims to those skilled in the art. In the drawings, like numbers refer to like elements. It will be understood that when an element is referred to as being "connected" or "coupled" to another element, it can be directly connected or coupled to the other element or intervening elements may be present. As used herein the term "and/or" includes any and all combinations of one or more of the associated listed items.

The terminology used herein is for the purpose of describing particular embodiments only and is not intended to be limiting of the inventive subject matter. As used herein, the singular forms "a", "an" and "the" are intended to include the plural forms as well, unless expressly stated otherwise. It will be further understood that the terms "includes," "comprises," "including" and/or "comprising," when used in this specification, specify the presence of stated features, integers, steps, operations, elements, and/or components, but do not preclude the presence or addition of one or more other features, integers, steps, operations, elements, components, and/or groups thereof.

Unless otherwise defined, all terms (including technical and scientific terms) used herein have the same meaning as commonly understood by one of ordinary skill in the art to which this inventive subject matter belongs. It will be further understood that terms, such as those defined in commonly used dictionaries, should be interpreted as having a meaning that is consistent with their meaning in the context of the specification and the relevant art and will not be interpreted in an idealized or overly formal sense unless expressly so defined herein.

As will be appreciated by one of skill in the art, the inventive subject matter may be embodied as systems, methods and computer program products. Some embodiments of the inventive subject matter may include hardware and/or combinations of hardware and software. Some embodiments of the inventive subject matter include circuitry configured to provide functions described herein. It will be appreciated that such circuitry may include analog circuits, digital circuits, and combinations of analog and digital circuits.

Embodiments of the inventive subject matter are described below with reference to block diagrams and/or operational illustrations of systems and methods according to various embodiments of the inventive subject matter. It will be understood that each block of the block diagrams and/or operational illustrations, and combinations of blocks in the block diagrams and/or operational illustrations, can be implemented by analog and/or digital hardware, and/or computer program instructions. These computer program instructions may be provided to a processor of a general purpose computer, special purpose computer, ASIC, and/or other programmable data processing apparatus, such that the instructions, which execute via the processor of the computer and/or other programmable data processing apparatus, create means for implementing the functions/acts specified in the block diagrams and/or operational illustrations. In some implementations, the functions/acts noted in the figures may occur out of the order noted in the block diagrams and/or operational illustrations. For example, two operations shown as occurring in succession may, in fact, be executed substantially concurrently or the operations may sometimes be executed in the reverse order, depending upon the functionality/acts involved.

Some embodiments of the inventive subject matter relate to interfacing of variably available power sources with UPSs. As referred to herein, "variably available power sources" include power sources, such as solar, wind, tidal and similar renewable energy sources, having an availability (*e*.*g*., presence and capacity) that fluctuates with environmental conditions (*e*.*g*., availability of wind, sun or tidal change) and that are not, as a general rule, available on demand. Such power sources may also be referred to as "variable", "intermittent" or "non-dispatchable" and, for purposes of the present application, such sources shall be referred to as "variably available power sources."

Some embodiments of the inventive subject matter arise from a realization that the DC link bus can be a critical point in the UPS architecture. Failure of a variably available power source, such as a photovoltaic array, coupled to the DC link can potentially impact the output of the UPS and/or reduce system robustness and reliability. Some embodiments of the inventive subject matter may address such issues by using a variably available power source interface circuit comprising a converter having an output coupled to the AC output and an input configured to receive power from a variably available power source. In some UPS system embodiments, for example, generic power conversion modules may be configured to include one or more modules configured to provide online-UPS functions, output-paralleled with one or more modules configured to provide a variably available power source interface for the UPS system. In this manner, isolation between the variably available power source and DC bus of the UPS module(s) may be provided. In addition, modules may be selectively configured for use as UPS modules or variably available power source interfaces depending on the relative capacities and requirements of the system.

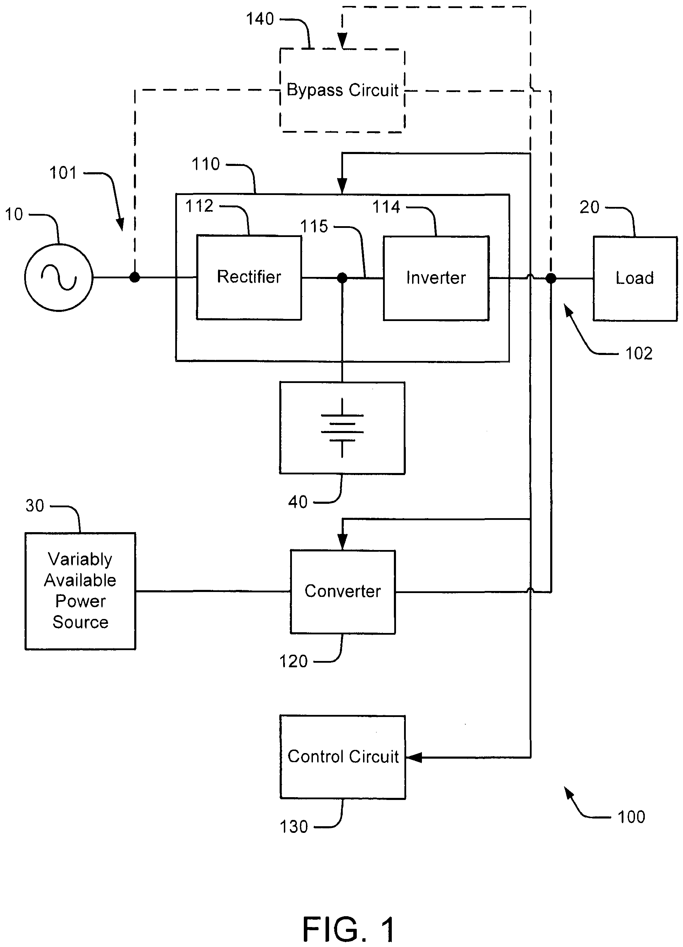

FIG. 1 illustrates a UPS system 100 useful in understanding the inventive subject matter but not covered by the claim. The UPS system 100 includes a UPS circuit 110 including a first converter circuit, *e.g.*, a rectifier 112, and a second converter circuit, *e.g.*, an inverter 114, coupled by a DC link 115. An auxiliary power source 40, *e.g.*, one or more batteries, may be coupled to the DC link 115. The input of the rectifier 112 is coupled to an AC input 101 of the UPS system, and the output of the inverter 114 is coupled to an AC output 102 of the UPS system 100. The UPS circuit 110 is configured to provide uninterruptible power to a load 20 coupled to the AC output 102 from an AC power source 10 (e.g., a utility source and/or local generator) coupled to the AC input 101 and from the auxiliary power source 40, which may provide power in the event of a failure of the AC source 10. The UPS system 100 may also include a bypass circuit 140 (e.g., a static switch), which may be used to bypass the UPS circuit 110 to provide power directly from the AC power source 10 to the load 20, which may support maintenance and high-efficiency modes of operation. It will be appreciated that the UPS system 100 may be a single-phase or multiphase (e.g., three-phase) system.

The UPS system 100 further comprises a third converter circuit 120, coupled between the AC output 102 and a variably available power source 30, such as a solar or wind power source. A control circuit 130 is operatively associated with the UPS circuit 110 and the converter circuit 120 (and, optionally, the bypass circuit 140) and is configured to cooperatively control the UPS circuit 110 and the converter circuit 120 to selectively transfer power to the load 20 from the AC power source 10 and the variably available power source 30.

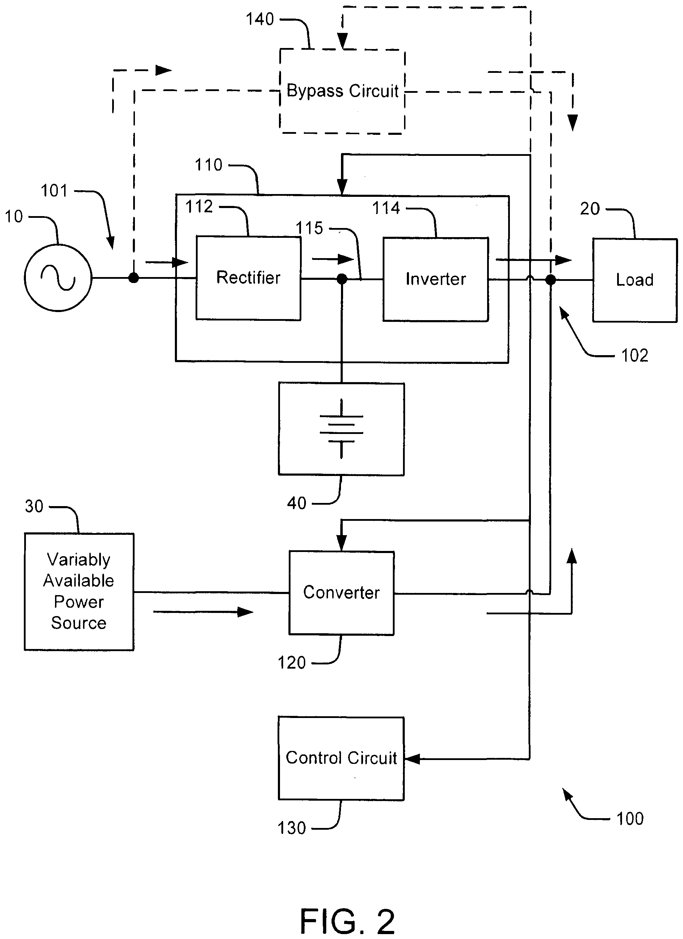

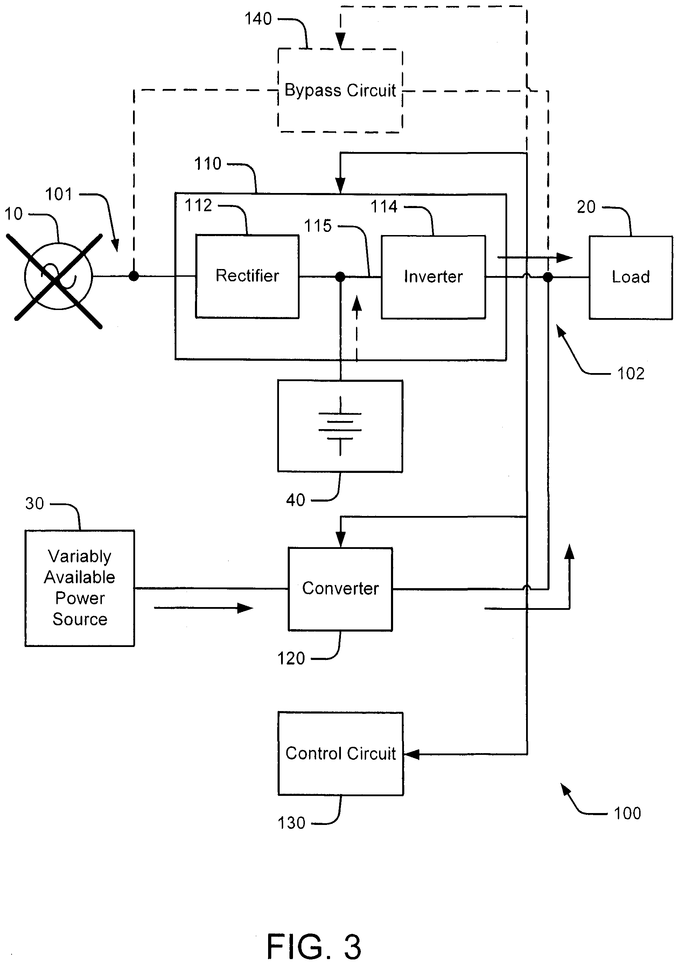

For example, as illustrated in FIG. 2, when the AC power source 10 is producing power in manner meeting predetermined criteria, power may be provided to the load 20 from the AC power source 10 through the rectifier 112 and inverter 114 (and/or via the bypass circuit 140), while power is concurrently transferred to the load 20 from the variably available power source 30 via the converter 120. As shown in FIG. 3, upon failure of the AC power source 10, the control circuit 130 may operate the inverter 114 of the UPS circuit 110 and the converter 120 such that power is concurrently delivered to the load 20 from the variably available power source 30 and the auxiliary power source 40.

It will be appreciated that the above-described components of the UPS system 100 may be integrated in one assembly or may implemented using multiple interoperating assemblies with connecting power and control links.

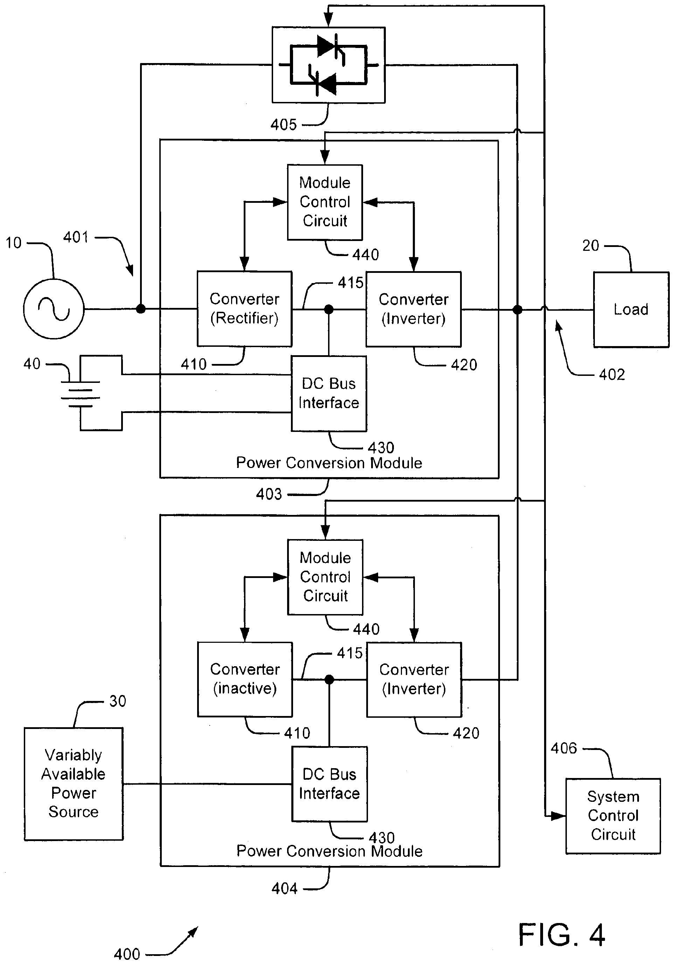

FIG. 4 illustrates a modular UPS system 400 with a variably available power source interface capability according to embodiments of the inventive subject matter. The UPS system 400 includes an AC input 401 configured to be coupled to an AC power source 10 and an AC output 402 configured to be coupled to a load 20. The UPS system 400 further includes first and second power conversion modules 403, 404 having a common architecture, including a first converter unit 410 and a second converter unit 420 coupled by a DC bus 415, a DC bus interface unit 430 and a module control circuit 440 configured to control the first converter unit 410, the second converter unit 420 and/or the DC bus interface unit 430. A system control circuit 406 controls interoperation of the first and second power conversion modules 403, 404 and a bypass circuit 405.

The first power conversion module 403 is configured to provide a UPS function. In particular, the first module 403 is configured to operate the first converter unit 410 as a rectifier to produce a DC voltage on the DC bus 415 from the AC power source 10. In some embodiments, the first converter units 410 may comprise passive rectifiers while, in other embodiments, the first converter units 410 may be active circuits that may be used to implement a rectifier function, but that are selectively reconfigurable to provide other conversion operations, such as DC/DC conversion, by, for example, changing the manner in which the active circuits are controlled. The first module 403 is further configured to operate the second converter unit 420 as an inverter to produce an AC voltage at the AC output 402. The DC bus interface unit 430 of the first module 403 provides an interface to one or more batteries 40, which may be used to provide auxiliary power in the event of a failure of the AC power source 10.

The second power conversion module 404 is configured differently to provide an interface to a variably available power source 30 (*e.g.*, wind, solar, tidal, etc.). The second converter unit 420 of the second module 404 is operated as an inverter. The first converter unit 410, however, is inactive. The variably available power source 30 is coupled to the DC bus 415 using the DC bus interface unit 430. Depending on the nature of the variably available power source 30, the DC bus interface unit 430 may simply connect the variably available power source 30 to the DC bus 415 without a voltage conversion, or the DC bus interface unit 430 may provide, for example, a DC/DC or AC/DC conversion function.

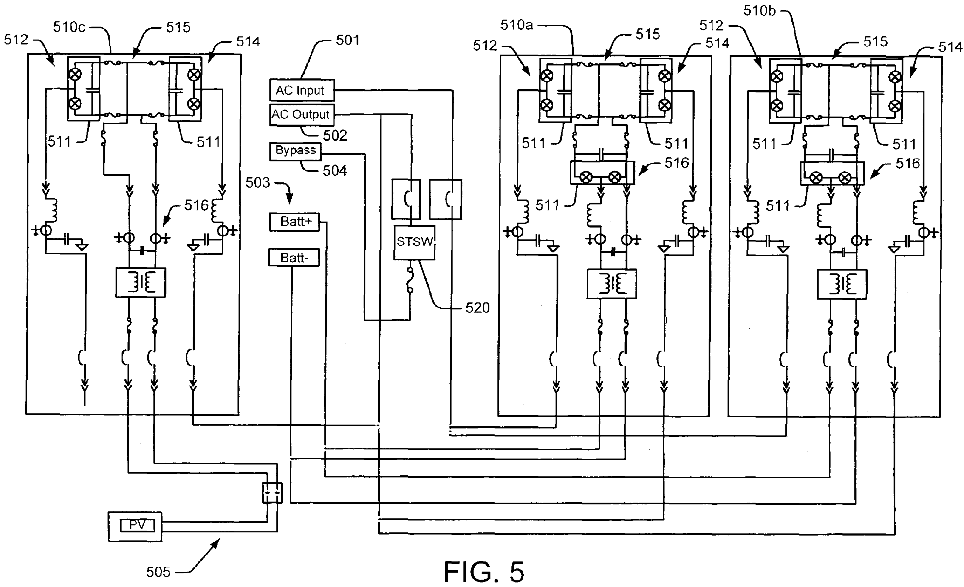

FIG. 5 illustrates a combination of power conversion modules 510a, 510b, 510c configured to provide a system such as the system 400 of FIG. 4. The modules 501a, 510b, 510c each comprise a first converter unit 512 and a second converter unit 514 coupled by DC busses 515, as well as a DC bus interface unit 516 that may be used for coupling to a battery or other power source. The first converter units 512, the second converter units 514 and the DC bus interface units 516 each include circuitry wherein active switching units 511 may be installed to realize half-bridge circuits. The modules 510a, 510b, 510c may also include inductors, capacitors, current sensors, contactors and fuses.

The first and second modules 510a, 510b are configured to operate as paralleled UPSs, with the first converter units 512 configured to operate as rectifiers coupled to an AC input bus 501 and the second converter units 514 configured to operate as inverters coupled to an AC output bus 502. The DC bus interface units 516 of the first and second modules 510a, 510b are configured to provide DC/DC converters coupled to battery busses 503.

A third module 510c is configured to provide an interface for connection of a photovoltaic (PV) power source via a PV bus 505. The second converter unit 514 of the third module 510c is configured to operate as an inverter, output-paralleled with the first and second modules 510a, 510b at the AC output bus 502. The first converter unit 512 of the third module is inactive, *e*.*g*., it may be operationally deactivated or active devices and passive components thereof may be depopulated. As shown, active components may be depopulated from the DC bus interface unit 516 of the third module 510c to allow a direct connection of the DC busses 515 thereof to the PV bus 505.

A bypass circuit including a static switch 520 is also provided. The static switch 520 is coupled to a bypass bus 504, which may be connected to the same AC source as the AC input bus 501. The modular configuration illustrated in FIG. 5 provides for use of common power conversion modules while supporting a degree of isolation of the PV source from the DC busses 515 of the first and second modules 510a, 51 0c, which are operated as UPSs.

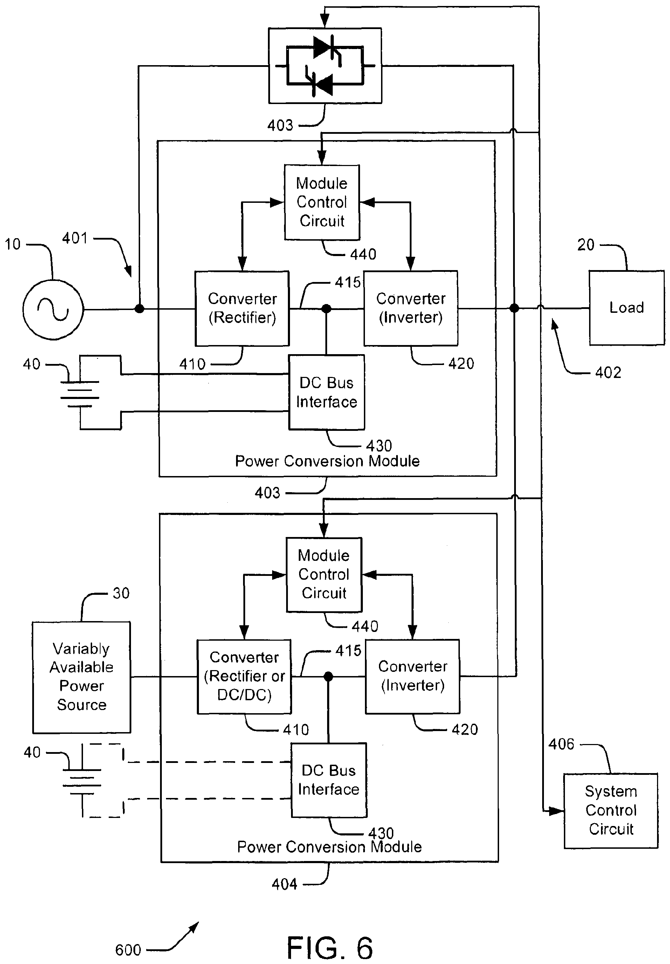

FIG. 6 illustrates a modular UPS system 600 according to further embodiments of the inventive subject matter. The system 600 uses first and second modules 403, 404 as shown in FIG. 4, except that the module 404 is configured to provide power from a variably available power source 30 via a first converter unit 410 of the second module 404, rather than via the DC bus interface unit 430. Depending on the nature of the variably available power source 30, the first converter unit 410 of the second module 404 may be operated as a rectifier or as a DC/DC converter. The bus interface unit 430 may be used for connection of one or more additional batteries 40.

In the drawings and specification, there have been disclosed exemplary embodiments of the inventive subject matter. Although specific terms are employed, they are used in a generic and descriptive sense only and not for purposes of limitation, the scope of the inventive subject matter being defined by the following claims.

## Claims

1. An uninterruptible power supply, in short UPS, system (400; 600), comprising:
an AC input (401) configured to be coupled to an AC power source (10);
an AC output (402) configured to be coupled to a load (20);
a first power conversion module (403) comprising a first converter circuit (410) coupled to the AC input (401), a second converter circuit (420) coupled to the AC output (402) and a first DC bus (415) coupling the first converter circuit (410) to the second converter circuit (420);
the UPS system (400; 600) **characterised by** further comprising:
a second power conversion module (404) comprising a third converter circuit (420) having an output coupled to the AC output (402), a fourth converter circuit (410) coupled to the third converter circuit (420), and a second DC bus (415) coupling the third converter circuit to the fourth converter circuit and configured to receive power from a photovoltaic power source (30); and
a control circuit (406) operatively associated with the first power conversion module (403) and the second power conversion module (404) and configured to control the first converter circuit (410), the second converter circuit (420) and the third converter circuit (420) to concurrently transfer power to the load from the AC power source (10) via the first converter circuit (410) and the second converter circuit (420) and from the photovoltaic power source (30) to the load via the third converter circuit (420).

2. The UPS system of Claim 1, wherein the first DC bus (415) is coupled to an auxiliary power source (40), wherein the third converter circuit (420) comprises an inverter coupling the second DC bus (415) to the AC output (402) and wherein the first DC bus (415) and the second DC bus (415) are not connected in common to the auxiliary power source (40).

3. The UPS system of Claim 1, wherein the photovoltaic power source (30) is coupled to an input of the third converter circuit (420) via the fourth converter circuit (410) and the second DC bus (415).

4. The UPS system of Claim 3, wherein the fourth converter circuit (410) is selectively configurable to operate as an AC/DC converter circuit and a DC/DC converter circuit.

5. A method comprising:
populating a UPS system (400) with a plurality of power conversion modules (403, 404), each comprising a first converter unit (410), a second converter unit (420) and a DC bus (415) coupling the first converter unit to the second converter unit;
coupling outputs of the second converter units (420) of the power conversion modules (403, 404) in common to an AC output (402);
coupling an input of a first converter unit (410) of a first one of the power conversion modules (403) to an AC power source (10);
the method being **characterised by** further comprising:
coupling the DC bus (415) of a second one of the power conversion modules (404) to a photovoltaic power source (30); and
concurrently transferring power to the load (20) from an AC power source (10) via the second converter unit (420) of the first power conversion module (403) and from the photovoltaic power source (30) via the second converter unit (420) of the second power conversion module (404).

6. The method of Claim 5, comprising deactivating the first converter unit (410) of the second power conversion module (404).

7. The method of Claim 5, wherein coupling the DC bus (415) of a second one of the power conversion modules (404) to a photovoltaic power source (30) comprises coupling the DC bus (415) of the second power conversion module (404) to the photovoltaic power source (30) via the first converter unit (410) of the second power conversion module (404) and further comprising coupling the DC bus (415) of the second power conversion module (404) to an auxiliary power source (40).

8. The method of Claim 5, comprising operating the second converter units (420) of the power conversion modules (403, 404) as inverters and operating the first converter unit (410) of the first power conversion module (403) as a rectifier.

## Patentansprüche

1. System einer unterbrechungsfreien Stromversorgung, kurz USV, (400; 600), umfassend:
einen Wechselstromeingang (401), der konfiguriert ist, um mit einer Wechselstromquelle (10) gekoppelt zu werden;
einen Wechselstromausgang (402), der konfiguriert ist, um mit einer Last (20) gekoppelt zu werden;
ein erstes Stromwandlungsmodul (403) umfassend eine erste Wandlerschaltung (410), die mit dem Wechselstromeingang (401) gekoppelt ist, eine zweite Wandlerschaltung (420), die mit dem Wechselstromausgang (402) gekoppelt ist, und einen ersten Gleichstrombus (415), der die erste Wandlerschaltung (410) mit der zweiten Wandlerschaltung (420) koppelt;
wobei das USV-System (400; 600) **dadurch gekennzeichnet ist, dass** es ferner umfasst:
ein zweites Stromwandlungsmodul (404), umfassend eine dritte Wandlerschaltung (420), die einen Ausgang aufweist, der mit dem Wechselstromausgang (402) gekoppelt ist, eine vierte Wandlerschaltung (410), die mit der dritten Wandlerschaltung (420) gekoppelt ist, und einen zweiten Gleichstrombus (415), der die dritte Wandlerschaltung mit der vierten Wandlerschaltung koppelt und konfiguriert ist, um Strom von einer fotovoltaischen Stromquelle (30) zu erhalten; und
eine Steuerschaltung (406), die mit dem ersten Stromwandlungsmodul (403) und dem zweiten Stromwandlungsmodul (404) betriebsfähig verknüpft und konfiguriert ist, um die erste Wandlerschaltung (410), die zweite Wandlerschaltung (420) und die dritte Wandlerschaltung (420) zu steuern, um Strom an die Last von der Wechselstromquelle (10) über die erste Wandlerschaltung (410) und die zweite Wandlerschaltung (420) und von der fotovoltaischen Stromquelle (30) an die Last über die dritte Wandlerschaltung (420) gleichzeitig zu übertragen.

2. USV-System nach Anspruch 1, wobei der erste Gleichstrombus (415) mit einer Hilfsstromquelle (40) gekoppelt ist, wobei die dritte Wandlerschaltung (420) einen Wechselrichter, der den zweiten Gleichstrombus (415) mit dem Wechselstromausgang (402) koppelt, umfasst und wobei der erste Gleichstrombus (415) und der zweite Gleichstrombus (415) nicht gemeinsam mit der Hilfsstromquelle (40) verbunden sind.

3. USV-System nach Anspruch 1, wobei die fotovoltaische Stromquelle (30) über die vierte Wandlerschaltung (410) und den zweiten Gleichstrombus (415) mit einem Eingang der dritten Wandlerschaltung (420) gekoppelt ist.

4. USV-System nach Anspruch 3, wobei die vierte Wandlerschaltung (410) selektiv konfigurierbar ist, um als eine Wechselstrom/Gleichstrom-Wandlerschaltung und eine Gleichstrom/Gleichstrom-Wandlerschaltung in Betrieb zu sein.

5. Verfahren, umfassend:
Bestücken eines USV-Systems (400) mit einer Vielzahl von Stromwandlungsmodulen (403, 404), jeweils umfassend eine erste Wandlereinheit (410), eine zweite Wandlereinheit (420) und einen Gleichstrombus (415), der die erste Wandlereinheit mit der zweiten Wandlereinheit koppelt;
gemeinsames Koppeln von Ausgängen der zweiten Wandlereinheiten (420) der Stromwandlungsmodule (403, 404) mit einem Wechselstromausgang (402);
Koppeln eines Eingangs einer ersten Wandlereinheit (410) eines ersten einen der Stromwandlungsmodule (403) mit einer Wechselstromquelle (10);
wobei das Verfahren **dadurch gekennzeichnet ist, dass** es ferner umfasst:
Koppeln des Gleichstrombusses (415) eines zweiten einen der Stromwandlungsmodule (404) mit einer fotovoltaischen Stromquelle (30); und
gleichzeitiges Übertragen von Strom an die Last (20) von einer Wechselstromquelle (10) über die zweite Wandlereinheit (420) des ersten Stromwandlungsmoduls (403) und von der fotovoltaischen Stromquelle (30) über die zweite Wandlereinheit (420) des zweiten Stromwandlungsmoduls (404).

6. Verfahren nach Anspruch 5, umfassend ein Deaktivieren der ersten Wandlereinheit (410) des zweiten Stromwandlungsmoduls (404).

7. Verfahren nach Anspruch 5, wobei das Koppeln des Gleichstrombusses (415) eines zweiten einen der Stromwandlungsmodule (404) mit einer fotovoltaischen Stromquelle (30) das Koppeln des Gleichstrombusses (415) des zweiten Stromwandlungsmoduls (404) mit der fotovoltaischen Stromquelle (30) über die erste Wandlereinheit (410) des zweiten Stromwandlungsmoduls (404) umfasst und ferner umfassend das Koppeln des Gleichstrombusses (415) des zweiten Stromwandlungsmoduls (404) mit einer Hilfsstromquelle (40).

8. Verfahren nach Anspruch 5, umfassend ein Betreiben der zweiten Wandlereinheiten (420) der Stromwandlungsmodule (403, 404) als Wechselrichter und das Betreiben der ersten Wandlereinheit (410) des ersten Stromwandlungsmoduls (403) als ein Gleichrichter.

## Revendications

1. Système d'alimentation sans coupure, ASC, (400, 600), comprenant :
une entrée CA (401) configurée pour être couplée à une source d'alimentation CA (10) ;
une sortie CA (402) configurée pour être couplée à une charge (20) ;
un premier module de conversion d'énergie (403) comprenant un premier circuit convertisseur (410) couplé à l'entrée CA (401), un deuxième circuit convertisseur (420) couplé à la sortie CA (402) et un premier bus CC (415) couplant le premier circuit convertisseur (410) au deuxième circuit convertisseur (420) ;
le système ASC (400 ; 600) **caractérisé par** le fait de comprendre en outre :
un second module de conversion d'énergie (404) comprenant un troisième circuit convertisseur (420) ayant une sortie couplée à la sortie CA (402), un quatrième circuit convertisseur (410) couplé au troisième circuit convertisseur (420), et un second bus CC (415) couplant le troisième circuit convertisseur au quatrième circuit convertisseur et configuré pour recevoir de l'énergie provenant d'une source d'énergie photovoltaïque (30) ; et
un circuit de commande (406) associé de manière fonctionnelle au premier module de conversion d'énergie (403) et au second module de conversion d'énergie (404) et configuré pour commander le premier circuit convertisseur (410), le deuxième circuit convertisseur (420) et le troisième circuit convertisseur (420) pour transférer simultanément de l'énergie à la charge provenant de la source d'alimentation CA (10) par l'intermédiaire du premier circuit convertisseur (410) et du deuxième circuit convertisseur (420) et de la source d'alimentation photovoltaïque (30) à la charge par l'intermédiaire du troisième circuit convertisseur (420).

2. Système ASC selon la revendication 1, dans lequel le premier bus CC (415) est couplé à une source d'alimentation auxiliaire (40), dans lequel le troisième circuit convertisseur (420) comprend un onduleur couplant le second bus CC (415) à la sortie CA (402) et dans lequel le premier bus CC (415) et le second bus CC (415) ne sont pas connectés en commun à la source d'alimentation auxiliaire (40).

3. Système ASC selon la revendication 1, dans lequel la source d'énergie photovoltaïque (30) est couplée à une entrée du troisième circuit convertisseur (420) par l'intermédiaire du quatrième circuit convertisseur (410) et du second bus CC (415).

4. Système ASC selon la revendication 3, dans lequel le quatrième circuit convertisseur (410) peut être configuré de manière sélective pour fonctionner en tant que circuit convertisseur CA/CC et un circuit convertisseur CC/CC.

5. Procédé comprenant :
le remplissage d'un système ASC (400) avec une pluralité de modules de conversion d'énergie (403, 404), chacun comprenant une première unité de convertisseur (410), une seconde unité de convertisseur (420) et un bus CC (415) couplant la première unité de convertisseur à la seconde unité de convertisseur ;
le couplage de sorties des secondes unités de convertisseur (420) des modules de conversion d'énergie (403, 404) en commun à une sortie CA (402) ;
le couplage d'une entrée d'une première unité de convertisseur (410) d'un premier des modules de conversion d'énergie (403) à une source d'alimentation CA (10);
le procédé étant **caractérisé en ce qu'**il comprend en outre :
le couplage du bus CC (415) d'un second des modules de conversion d'énergie (404) à une source d'énergie photovoltaïque (30) ; et
le transfert simultané d'énergie à la charge (20) depuis une source d'alimentation CA (10) par l'intermédiaire de la seconde unité de conversion (420) du premier module de conversion d'énergie (403) et depuis la source d'alimentation photovoltaïque (30) par l'intermédiaire de la seconde unité de convertisseur (420) du second module de conversion d'énergie (404).

6. Procédé selon la revendication 5, comprenant la désactivation de la première unité de convertisseur (410) du second module de conversion d'énergie (404).

7. Procédé selon la revendication 5, dans lequel le couplage du bus CC (415) d'un second des modules de conversion d'énergie (404) à une source d'énergie photovoltaïque (30) comprend le couplage du bus CC (415) du second module de conversion d'énergie (404) à la source d'énergie photovoltaïque (30) par l'intermédiaire de la première unité de convertisseur (410) du second module de conversion d'énergie (404) et comprenant en outre le couplage du bus CC (415) du second module de conversion d'énergie (404) à une source d'alimentation auxiliaire (40).

8. Procédé selon la revendication 5, comprenant le fonctionnement des secondes unités de convertisseur (420) des modules de conversion d'énergie (403, 404) en tant qu'onduleurs et le fonctionnement de la première unité de convertisseur (410) du premier module de conversion d'énergie (403) en tant que redresseur.
